# EUROPEAN PATENT SPECIFICATION

(11) **EP 3 355 331 B1**
(45) Date of publication and mention of the grant of the patent: **02.09.2020**
(21) Application number: 17163717.6
(22) Date of filing: 30.03.2017
(51) Int. Cl.: H01H 33/42, H01H 33/02, H01H 3/46, H02B 13/035

(54) **GAS-INSULATED SWITCH GEAR USING DUAL MOTION WITH MULTI-LEVER**
GASISOLIERTE SCHALTANLAGE MIT ZWEI BEWEGUNGEN MIT MULTI-HEBEL
APPAREILLAGE DE COMMUTATION À ISOLATION GAZEUSE AU MOYEN D'UN DOUBLE MOUVEMENT À PLUSIEURS LEVIERS

(30) Priority: 25.01.2017 KR 20170012187
(43) Date of publication of application: 01.08.2018
(73) Proprietor: LSIS Co., Ltd., Gyeonggi-Do 14119 (KR)
(72) Inventor: PARK, Jingun, Gyeonggi-do 14118 (KR)
(74) Representative: K&L Gates LLP

(56) References cited:
- KR-B1- 100 631 007
- US-A1- 2008 135 526
- US-A1- 2010 163 527

## Description

### BACKGROUND OF THE DISCLOSURE

### 1. Field of the disclosure

The present disclosure relates to a dual-motion type gas-insulated switchgear having multiple levers, more particularly, to a dual-motion type gas-insulated switchgear having multiple levers capable of controlling an operation time for closing or opening as well as reducing a size of a gas circuit breaker as well as allowing to have a longer stroke.

### 2. Description of the conventional art

In recent years, electric power stations or the like have widely employed a gas-insulated switchgears (GIS) using sulfur hexafluoride (SF6) gas having a high insulation resistance among switch mechanisms constituting high voltage substation facilities.

Gas-Insulated Switchgear as an electric power device used for switching, grounding, branching and monitoring a high-voltage electric circuit in the range of several thousand to tens of thousands of volts in a power transmission, transformation and large distribution power system, is a switchgear that accommodates switching and grounding apparatuses in a tank filled with an insulating gas such as sulfur hexafluoride (SF6) for extinguishing an arc generated at the time of switching of a high-voltage line and electrical insulation between alternating current poles.

A gas circuit breaker provided in such a conventional gas-insulated switchgear may be divided into a movable portion and a stationary portion, wherein the movable portion is provided with a movable contact, a main nozzle and a cylinder, and the stationary portion is provided with a stationary contact brought into contact with or separated from the movable contact.

Here, a compression chamber may be provided within the cylinder, and an insulating gas is filled within the compression chamber. The gas circuit breaker is in a state that the movable contact and the stationary contact are in contact with each other at the time of closing, and in a state that the movable contact and the stationary contact are separated from each other at the time of opening.

In recent years, in order to improve the breaking performance of such a gas-insulated switchgear, a dual-motion type gas-insulated switchgear in which the stationary contact of the stationary portion relatively moves toward or away from the movable contact has been widely used.

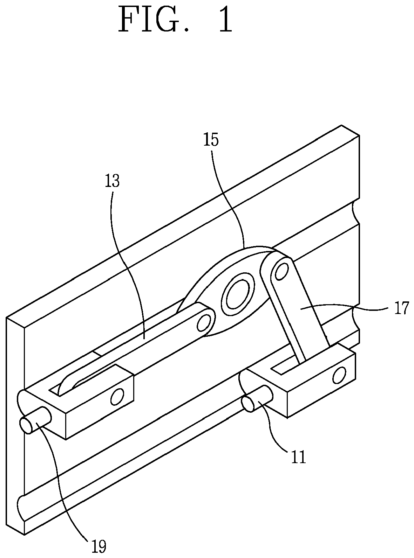

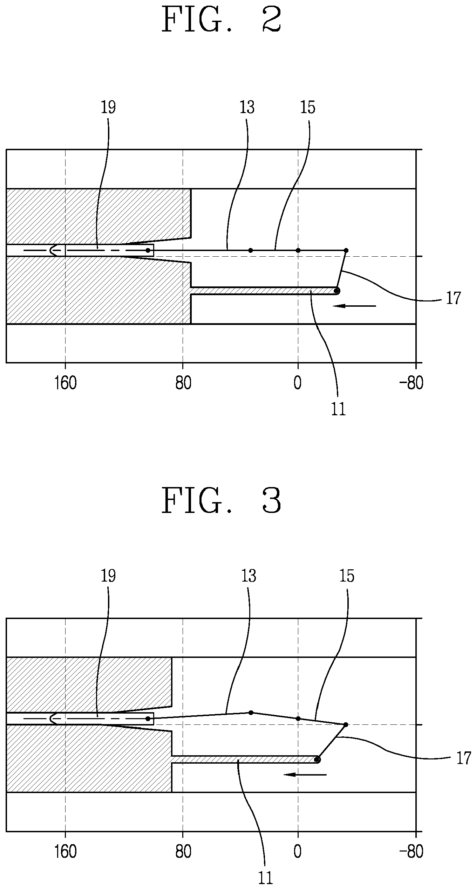

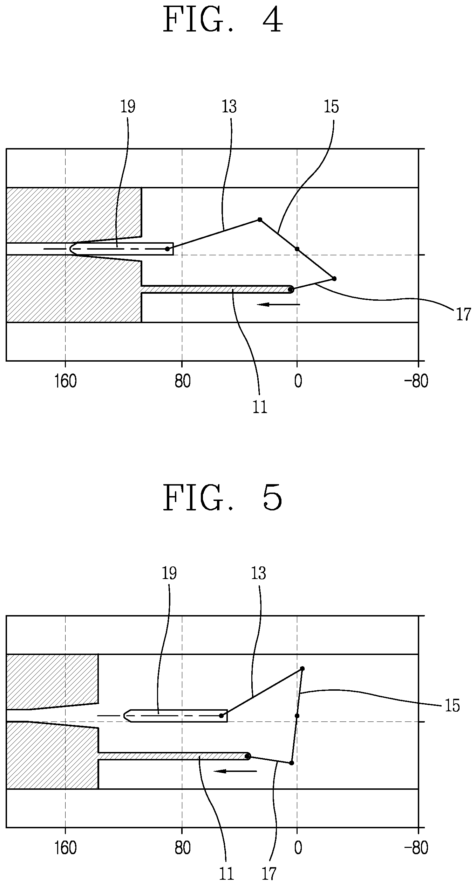

On the other hand, FIG. 1 is a perspective view illustrating a dual-motion structure of a gas-insulated switchgear in the related art, and FIGS. 2 through 5 are conceptual views illustrating a driving process through a dual-motion structure.

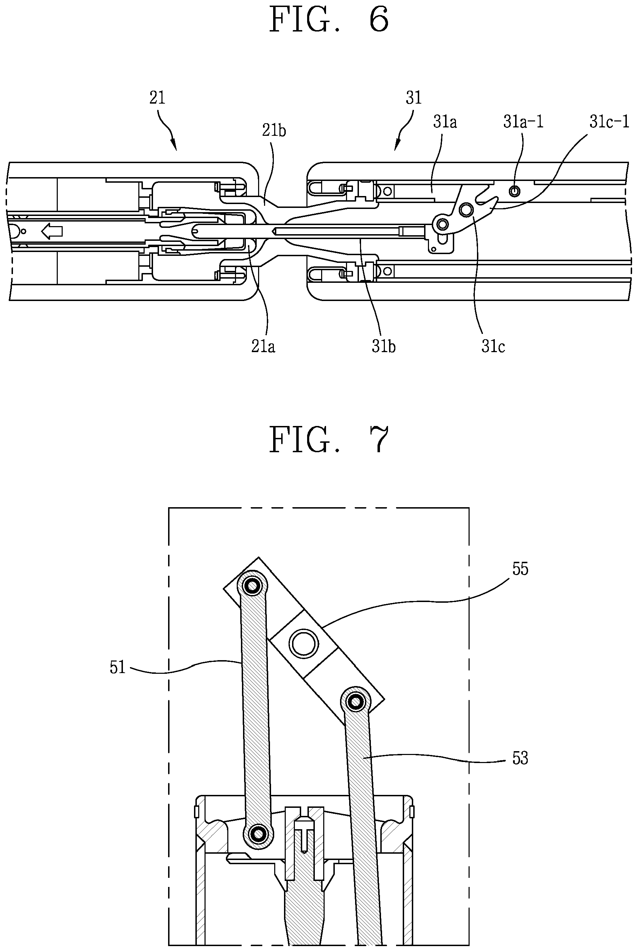

Furthermore, FIG. 6 is a block diagram illustrating a gas-insulated switchgear with a fork type dual-motion mode in the related art, and FIG. 7 is a block diagram illustrating a gas-insulated switchgear with a lever type dual-motion mode in the related art.

As illustrated in FIG. 1, according to a dual-motion structure in the related art, the movable base 11 may be connected to a second movable contact 19 with a plurality of levers 13, 15, 17 to move the second movable contact 19 according to the movement of the movable base 11 so as to allow the second movable contact 19 to be brought into contact with or separated from a first movable contact (not shown) provided on a first movable portion (not shown).

In other words, as illustrated in FIGS. 2 to 5, when the movable base 11 is moved to a breaking position by a drive device, a plurality of levers 13, 15, 17 rotate, and finally the second movable contact 19 may be separated from the first movable contact provided on the first movable portion while being moved backward according to the movement of the levers 13, 15, 17.

However, in case of such a dual-motion structure, when a stroke ratio between the movable base 11 and the second movable contact increases, a size of the levers 13, 15, 17 connecting the movable base 11 to the second movable contact 19 should be increased, thereby causing a problem of increasing a size of the gas circuit breaker provided in the gas-insulated switchgear.

Furthermore, as illustrated in FIG. 6, a dual-motion type gas-insulated switchgear formed with a fork type lever in the related art may include a first movable portion 21 provided with a first movable contact 21a and a nozzle 21b located on the left side, and a second movable portion 31 provided with a second movable contact 31b located on the right side.

Here, the second movable portion 31 is provided with a movable base 31a, and the movable base 31a is connected to the second movable contact 31b provided on the second movable portion 31 through a fork-shaped lever 31c.

Furthermore, the protrusion 31a-1 is formed on the movable base 31a, and when the movable base 31a moves, a fork-shaped protruding portion 31c-1 of the lever 31c rotates while being engaged with the protrusion 31a-1, and moves the second movable contact 31b at the same time to control the second movable contact 31b to be brought into contact with or separated from the first movable contact 21a.

However, in case of a fork-type gas-insulated switchgear, a strong impact may be incurred between the protrusion 31a-1 and the protruding portion 31c-1 of the lever 31c when the movable base 31a moves, thereby causing a problem in which a collision portion is easily broken when used for a long period of time.

On the other hand, as illustrated in FIG. 7, even in case of a gas-insulated switchgear with a lever type dual-motion mode, when a stroke ratio between a movable base 51 to a second movable contact 53 is set to 1:1, 1:2, 1:3 or the like, it may be adjusted only through the length of a lever 55, and therefore, when a stroke ratio between the movable base 51 and the second movable contact 53 connected to the lever 55 is relatively increased, a size of the lever should be increased, thereby causing a problem in which a size of gas circuit breaker is increased as a whole.

Furthermore, since the second movable contact 53 should move without a predetermined delay time when the movable base 51 moves, it may be impossible to move the second movable contact 53 only when a closing or opening operation is required, thereby causing a problem not to distribute energy used for closing or opening, thereby causing a problem significantly reducing the energy efficiency as well as deteriorating the opening performance.

US 2018/0135526 A1 discloses a dual-motion type gas-insulated switchgear according to the preamble of claim 1, and in particular a circuit breaker with a gear having a dead point. US2010/0163527 A1 discloses a high voltage gas circuit breaker.

### SUMMARY OF THE DISCLOSURE

The present disclosure is contrived to solve the foregoing problems, and an object of the present disclosure is to provide a dual-motion type gas-insulated switchgear having multiple levers capable of controlling an operation time for closing or opening as well as reducing a size of a gas circuit breaker as well as allowing to have a longer stroke.

The foregoing object of the present disclosure may be accomplished by providing a dual-motion type gas-insulated switchgear according to claim 1. Further characteristics are depicted in the dependent claims.

### BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure.

In the drawings:
FIG. 1 is a perspective view illustrating a dual-motion structure of a gas-insulated switchgear in the related art;
FIG. 2 is a conceptual view illustrating an operation process of a movable base and a second movable contact through a dual-motion structure provided in a gas-insulated switchgear in the related art;
FIG. 3 is a conceptual view illustrating a state in which a movable base is moved through a dual-motion structure provided in a gas-insulated switchgear in the related art;
FIG. 4 is a conceptual view illustrating a state in which the movable base is further moved in FIG. 3 through a dual-motion structure provided in a gas-insulated switchgear in the related art;
FIG. 5 is a conceptual view illustrating a state in which a movable base is moved through a dual-motion structure provided in a gas-insulated switchgear to separate a second movable contact from a first movable contact;
FIG. 6 is a configuration view illustrating a gas-insulated switchgear with a fork type dual-motion mode in the related art;
FIG. 7 is a configuration view illustrating a gas-insulated switchgear with a lever type dual-motion mode in the related art;
FIG. 8 is a configuration view illustrating a dual-motion type gas-insulated switchgear with multiple levers according to the present disclosure;
FIG. 9 is a configuration view illustrating a state in which a movable base of a dual-motion type gas-insulated switchgear having multiple levers according to the present disclosure starts to move from a closed state to an open state;
FIG. 10 is a configuration view illustrating a state in which a movable base of a dual-motion type gas-insulated switchgear having multiple levers according to the present disclosure has moved from a closed state to an open state by a predetermined distance;
FIG. 11 is a configuration view illustrating a state in which a movable base of a dual-motion type gas-insulated switchgear having multiple levers according to the present disclosure has moved to an open state;
FIG. 12 is a configuration view illustrating a state in which a movable base of a dual-motion type gas-insulated switchgear having multiple levers according to the present disclosure starts to move from an open state to a closed state;
FIG. 13 is a configuration view illustrating a state in which a movable base of a dual-motion type gas-insulated switchgear having multiple levers according to the present disclosure has moved from an open state to a closed state by a predetermined distance;
FIG. 14 is a configuration view illustrating a state in which a movable base of a dual-motion type gas-insulated switchgear having multiple levers according to the present disclosure has moved from an open state to a closed state;
FIG. 15 is a graph illustrating a stroke change of a second movable contact when the movable base moves in dual-motion type gas-insulated switchgear with multiple levers according to the present disclosure; and
FIG. 16 is a graph illustrating a stroke change when the movable base moves in a dual-motion type gas-insulated switchgear having multiple levers according to the present disclosure.

### DETAILED DESCRIPTION OF THE DISCLOSURE

Hereinafter, a dual-motion type gas-insulated switchgear with multiple levers according to an embodiment of the present disclosure will be described in detail with reference to the accompanying drawings.

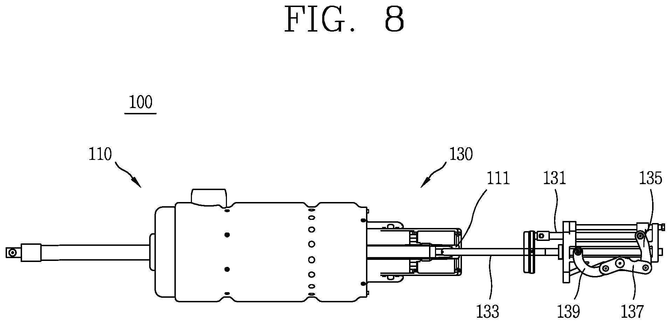

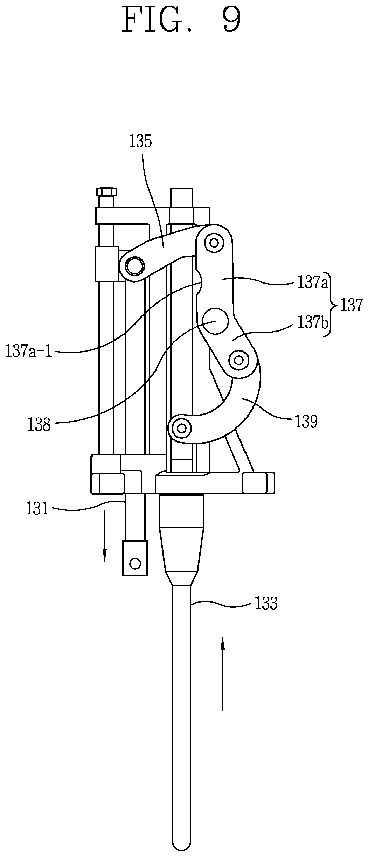

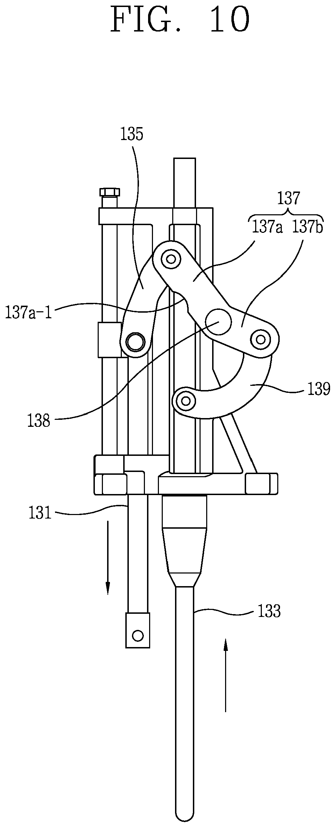

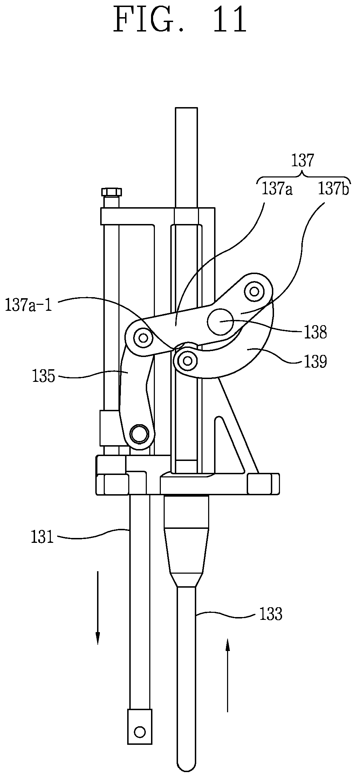

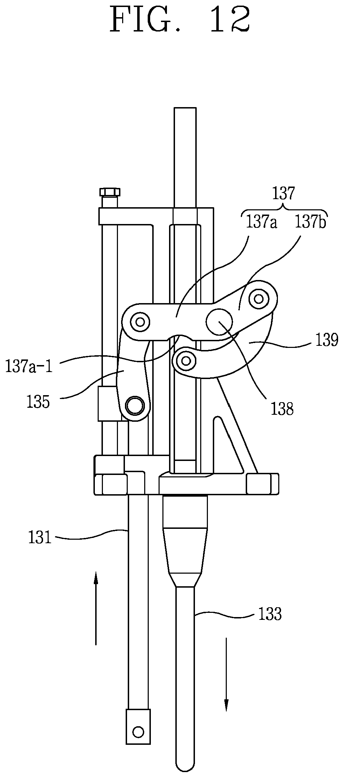

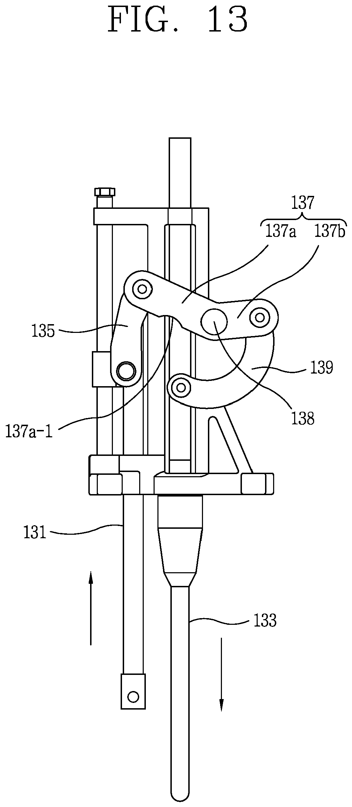

FIG. 8 is a configuration view illustrating a dual-motion type gas-insulated switchgear with multiple levers according to the present disclosure, and FIG. 9 is a configuration view illustrating a state in which a movable base of a dual-motion type gas-insulated switchgear having multiple levers according to the present disclosure starts to move from a closed state to an open state, and FIG. 10 is a configuration view illustrating a state in which a movable base of a dual-motion type gas-insulated switchgear having multiple levers according to the present disclosure has moved from a closed state to an open state by a predetermined distance, and FIG. 11 is a configuration view illustrating a state in which a movable base of a dual-motion type gas-insulated switchgear having multiple levers according to the present disclosure has moved to an open state, and FIG. 12 is a configuration view illustrating a state in which a movable base of a dual-motion type gas-insulated switchgear having multiple levers according to the present disclosure starts to move from an open state to a closed state, and FIG. 13 is a configuration view illustrating a state in which a movable base of a dual-motion type gas-insulated switchgear having multiple levers according to the present disclosure has moved from an open state to a closed state by a predetermined distance.

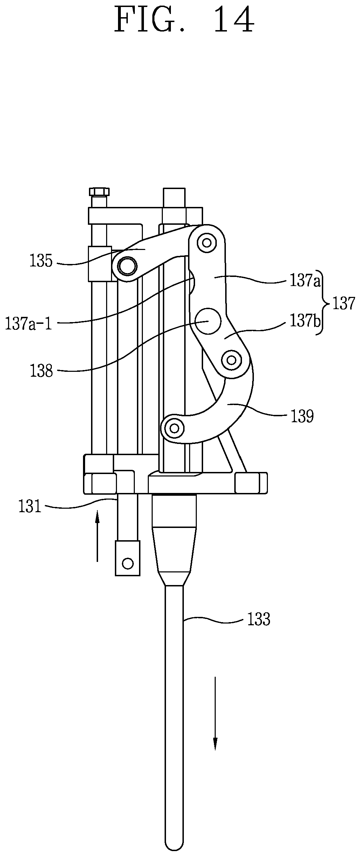

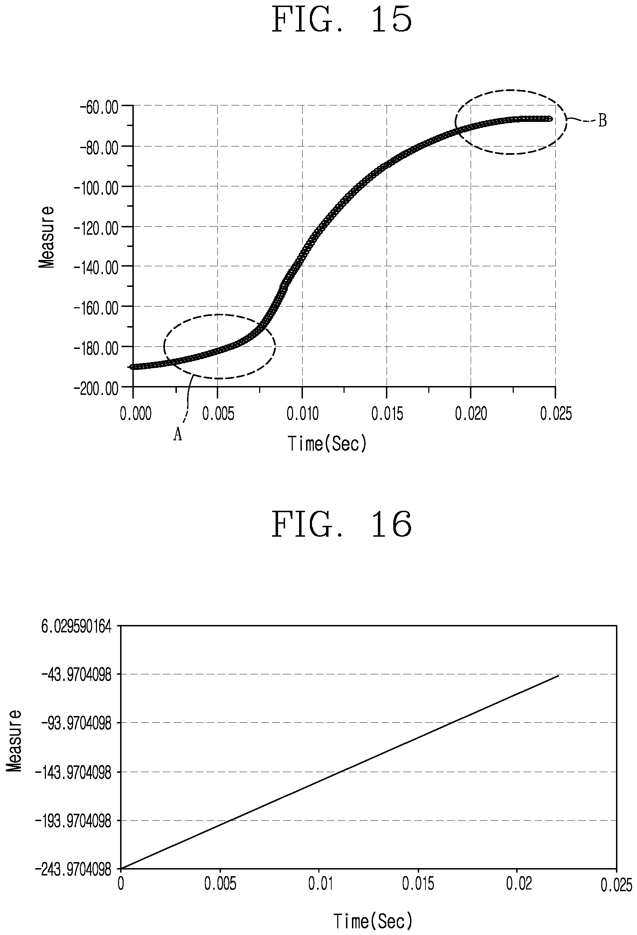

FIG. 14 is a configuration view illustrating a state in which a movable base of a dual-motion type gas-insulated switchgear having multiple levers according to the present disclosure has moved from an open state to a closed state, and FIG. 15 is a graph illustrating a stroke change of a second movable contact when the movable base moves in dual-motion type gas-insulated switchgear with multiple levers according to the present disclosure, and FIG. 16 is a graph illustrating a stroke change when the movable base moves in a dual-motion type gas-insulated switchgear having multiple levers according to the present disclosure.

As illustrated in FIG. 8, a dual-motion type gas-insulated switchgear with multiple levers according to the present disclosure may include a first movable portion 110 and a second movable portion 130 driven in a mutually moving dual-motion manner, and a gas circuit breaker 100, and the like.

Here, the first movable portion 110 is provided with a first movable contact 111, and the second movable portion 130 is provided with a second movable contact 133 brought into contact with or separated from the first movable contact 111.

Furthermore, the second movable portion 130 is provided with a movable base 131, a first lever 135, a second lever 137 and a third lever 139 to drive the second movable contact 133 in a dual-motion manner.

The movable base 131 is connected to the first lever 135 to move the second movable contact 133 in a connected manner through the respective levers 135, 137, 139 while moving by a drive device, and thus the second movable contact 133 is brought into contact with or separated from the first movable contact 111, thereby controlling the gas-insulated switchgear to be closed or opened.

One end of the first lever 135 is connected to the movable base 131, and the other end thereof is connected to the second lever 137 to rotate the second lever 137 while moving according to the movement of the movable base 131.

One end of the second lever 137 is connected to the first lever 135, and the other end thereof is connected to the third lever 139 to rotate in a clockwise or counter-clockwise direction according to the movement of the first lever 135 so as to move the third lever 139 close to or away from the second lever 137, thereby allowing the second movable contact 133 to be brought into contact with or separated from the first movable contact 111.

One end of the third lever 139 is connected to the other end of the second lever 137, and the other end thereof is connected to the second movable contact 133 to rotate the second lever 137 in a clockwise or counter-clockwise direction so as to move in close contact with or away from the second lever 137, thereby allowing the second movable contact 133 to be brought into contact with or separated from the first movable contact 111.

More specifically, as illustrated in FIGS. 9 to 11, when the movable base 131 is moved to an open state through the drive device, the first lever 135 moves along with the movable base 131 by a predetermined distance, then pulls one end of the second lever 137 toward the movable base 131 to rotate the second lever 137 in a counter-clockwise direction, and in connection therewith, the other end of the second lever 137 moves the other end of the third lever 139 to be in close contact with a side of the second lever 137 while pushing one end of the third lever 139 toward an opposite side of the movable base 131 to allow the second movable contact 133 to be separated from the first movable contact 111.

Furthermore, as illustrated in FIGS. 12 to 14, when the movable base 131 is moved to a closed state through the drive device, the first lever 135 moves while pushing one end of the second lever 137 to an opposite side of the movable base 131 to rotate the second lever 137 in a clockwise direction, and in connection therewith, the other end of the second lever 137 moves the other end of the third lever 139 to be away from the second lever 137 while pushing one end of the third lever 139 toward the movable base 131 to allow the second movable contact 133 to be brought into contact with the first movable contact 111.

On the other hand, when the gas-insulated switchgear is controlled to a closed state or open state, as illustrated in FIG. 9, when the movable base 131 is located at a closed state, a connecting portion between the first lever 135 and the movable base 131 is positioned closer to a contact portion between the first movable contact 111 and the second movable contact 133 than one end of the second lever 137, and when the movable base 131 is moved from a closed position to an open position, the second lever 137 moves along with the first lever 135 by a predetermined distance from the movable base 131 and then rotates.

In other words, the second lever 137 may be allowed to have a predetermined operation delay time, at an initial position in which the movable base 131 starts to move or at a completed position in which the movement of the movable base 131 is completed, the second lever 137 does not rotate even if the movable base 131 moves and thus the second movable contact 133 does not move.

Accordingly, as illustrated in FIGS. 15 and 16, even when a stroke is constantly applied to the movable base 131 through the drive device, the second lever 137 does not rotate at the initial position (A) or completed position (B) not to move the second movable contact 133 due to a small amount of stroke applied to the second movable contact 133, and the second lever 137 rotates at a position other than the initial position or completed position, namely, a position that requires closing or opening to rotate the second lever 137 so as to move the second movable contact 133 through the third lever 139 connected to the second lever 137 such that energy used for controlling the closing or opening of the gas-insulated switchgear is used only at a position that requires closing or opening, thereby reducing the amount of energy as well as enhancing the opening performance of the gas-insulated switchgear.

Meanwhile, the second lever 137 may include a first connecting plate 137a and a second connecting plate 137b.

The first connecting plate 137a is connected to the first lever 135, and formed to be inclined to an opposite side of the movable base 131.

Furthermore, the second connecting plate 137b is integrally formed with the first connecting plate 137a and connected to the third lever 139 and formed to be inclined to an opposite side of the movable base 131.

Accordingly, since the respective connecting plates 137a, 137b of the second lever 137 are formed to be inclined toward an opposite side of the movable base 131, when the second lever 137 rotates through the first lever 135, an amount of rotation of the second lever 137 increases to increase a movement length of the third lever 139 through the rotation of the second lever 137 so as to increase a length of stroke applied to the second movable contact 133 even in a small space.

Moreover, the first connecting plate 137a is formed to be longer than the second connecting plate 137b to decrease a stroke length applied to the third lever 139 through the second lever 13, thereby increasing an opening speed of the gas circuit breaker 100.

In addition, a mounting groove 137a-1 is formed on a lower surface of the first connecting plate 137a such that the other end of the third lever 139 is brought into contact with the second lever 137 and mounted thereon when in close contact with a side of the second lever 137.

Accordingly, when the second lever 137 rotates and the third lever 139 moves toward the second lever 137 to be in close contact therewith, the other end of the third lever 139 is located to be mounted on the mounting groove 137a-1, thereby preventing damage due to collision between the second lever 137 and the third lever 139 as well as increasing a length of stroke applied to the second movable contact 133 even through a small space.

Moreover, the third lever 139 is formed to be rounded toward the second lever 137.

Accordingly, when the second lever 137 rotates and the third lever 139 moves toward the second lever 137, a rounded surface of the third lever 139 is brought into close contact with the second lever 137 to minimize collision between the second lever 137 and the third lever 139, thereby preventing damage due to collision.

Furthermore, compared to when the third lever 139 has a flat shape, when the third lever 139 is moved toward the second lever 137, a central portion of the second lever 137 to which the stationary member 138 is further moved toward the third lever 139 by a roundly bent width of the third lever 139 to increase a moving distance of the third lever 139, thereby increasing a length of stroke applied to the second moving contact 133 even in a small space.

Hereinafter, an operation process of a dual-motion type gas-insulated switchgear with multiple levers will be described in detail with reference to FIGS. 9 through 14.

First, as illustrated in FIG. 9, when the movable base 131 is moved to an open position to separate the second movable contact 133 and the first movable contact 111 from each other through a driving device connected to the movable base 131, the first lever 135 connected to the movable base 131 moves along with the movable base 131.

Here, when the first lever 135 moves along with the movable base 131, the second lever 137 does not move along with the first lever 135 but has a predetermined delay time, and then rotates in a counter-clockwise direction according to the movement of the first lever 135.

In other words, as illustrated in FIG. 10, when the first lever 135 moves along with the movable base 131 by a predetermined distance and then the first lever 135 pulls the second lever 137 downward, the second lever 135 rotates, and at this time, a central portion of the second lever 137 is located in a state of being fixed to the second movable portion 130 through the stationary member 138, and thus does not move along with the first lever 135 but rotates in a counter-clockwise direction.

Furthermore, as illustrated in FIG. 11, when the second lever 137 rotates in a counter-clockwise direction, one end of the third lever 139 connected to the other end of the second lever 137 moves to an opposite side of the movable base 131 while being pulled toward the second lever 137, and in connection therewith, the other end of the third lever 139 moves close to a side of the second lever 137 to separate the second movable contact 133 from the first movable contact 111, thereby allowing the gas circuit breaker 100 to be in an open state.

Here, when the other end of the third lever 139 is brought into close contact with or away from the second lever 137, they move on the same line along with the stationary member 138, thereby decreasing a movement range of each lever 135, 137, 139.

Furthermore, since the third lever 139 is rounded toward the second lever 137, it may be possible to prevent damage due to mutual collision as well as increase a length of stroke applied to the second movable contact 133 even when the third lever 139 moves toward the second lever 137.

In addition, since the mounting groove 137a-1 is formed on a lower surface of the first connecting plate 137a constituting the second lever 137, when the third lever 139 moves close to a side of the second lever 137, the other end of the third lever 139 is mounted on the mounting groove 137a-1 to prevent breakage due to collision between them.

On the other hand, as illustrated in FIGS. 12 to 14, when the movable base 131 is moved to a closed position through the drive device, the first lever 135 connected to the movable base 131 moves while pushing one end of the second lever 137 to an opposite side of the movable base 131 to rotate the second lever 137 in a clockwise direction. Here, when the other end of the second lever 137 rotates in a clockwise direction while pushing one end of the third lever 139 toward the movable base 131, the other end of the third lever 139 is accordingly moved in a direction of being away from the second lever 137, and in connection therewith, the second movable contact 133 connected to the third lever 139 is moved toward the first movable contact 111 to allow the first movable contact 111 and second movable contact 133 to be brought into contact with each other, thereby allowing the gas circuit breaker 100 of the gas-insulated switchgear to be in a closed state.

In case of the present disclosure having the foregoing configuration, the movable base 131 and the second movable contact 133 driven in a dual-motion manner may be connected by a plurality of levers 135, 137, 139, and a force transferred to the movable base131 while the plurality of levers 135, 137, 139 are in close contact with one another or released from the close contact may be transferred to the second movable contact 133, and thus a size of the levers 135, 137, 139 may not be required to increase even when a stroke ratio between the movable base 131 and the second movable contact 133 increases, thereby reducing a size of the gas circuit breaker 100 as well as appropriately controlling a stroke ratio between the movable base 131 and the second movable contact 133.

Furthermore, the movable base 131 and the second movable contact 133 driven in a dual-motion manner may be connected by a plurality of levers 135, 137, 139, and when controlling the switchgear to a closed state or open state, the second movable contact 133 may not be allowed to move at an initial or completed position even if the movable base 131 moves, and the second movable contact 133 may be allowed to move at a position other than the initial or completed position so as to brought into contact with or separated from the first movable contact 111, thereby saving an amount of energy used during the closing or closing operation of the gas circuit breaker 100 as well as enhancing the breaking performance of the gas-insulated switchgear.

Furthermore, the first connecting plate 137a and the second connecting plate 137b may be inclined to an opposite side of the movable base 131, and an amount of rotation may be allowed to increase when the second lever 137 rotates through the first lever 135, thereby increasing a length of stroke applied to the second movable contact 133 even in a small space.

Furthermore, the first connecting plate 137a may be formed to be longer than the second connecting plate 137b to decrease a length of stroke applied to the third lever 139 through the second lever 137, thereby increasing an opening speed of the gas circuit breaker 100.

Furthermore, the mounting groove 137a-1 may be formed on a lower surface of the first connecting plate 137a such that the other end of the third lever 139 is brought into contact with the mounting groove 137a-1 to be mounted thereon when in close contact with a side of the second lever 137, thereby preventing a collision portion from being damaged by an impact between the second lever 137 and the third lever 139.

Furthermore, the third lever 139 may be formed to be rounded toward the second lever 137 such that a rounded surface thereof is brought into contact with a surface of the second lever 137 when the third lever 139 is moved toward the second lever 137, thereby minimizing collision with the second lever 137 as well as increasing a movement distance of the second movable contact 133.

Though a preferred embodiment of the present disclosure has been described in the above, it will be apparent to those skilled in the art that various alternatives can be used for the present disclosure and the above embodiment is modified in an appropriate manner and applied thereto in the same manner. Accordingly, the disclosure is not intended to limit the scope of the invention as defined by the limitation of the following claims.

## Claims

1. A dual-motion type gas-insulated switchgear having multiple levers including a first movable portion (110) provided with a first movable contact (111) and a second movable portion (130) provided with a second movable contact (133) to be brought into contact with or separated from the first movable contact, wherein the second movable portion (130) comprises:
a movable base (131) connected to a drive device;
a first lever (135) one end of which is connected to the movable base (131) to move in connection with the movable base (131);
a second lever (137) one end of which is connected to the other end of the first lever (135) wherein the second lever (137) is configured to rotate when the first lever (135) moves along with the movable base (131) and wherein the second lever (137) is configured to rotate in a state of being fixed to the second movable portion (130) through a stationary member (138); and
a third lever (139) one end of which is connected to the other end of the second lever (137), and the other end of which is connected to the second movable contact (133) to move according to the rotation of the second lever (137) to allow the second movable contact (133) to be brought into contact with or separated from the first movable contact (111),
wherein when the movable base (131) is moved to an open state, the first lever (135) is configured to move while pulling one end of the second lever (137) toward the movable base (131) to rotate the second lever (137) in a counter-clockwise direction, and in connection therewith, the other end of the second lever (137) moves the other end of the third lever (139) to be in close contact with a side of the second lever (137) while pushing one end of the third lever (139) toward an opposite side of the movable base (131) to allow the second movable contact (133) to be separated from the first movable contact (111), and
wherein when the movable base (131) is moved to a closed state, the first lever (135) is configured to move while pushing one end of the second lever (137) to an opposite side of the movable base (131) to rotate the second lever (137) in a clockwise direction, and in connection therewith, the other end of the second lever (137) moves the other end of the third lever (139) to be away from the second lever (137) while pushing one end of the third lever (139) toward the movable base (131) to allow the second movable contact (133) to be brought into contact with the first movable contact (111),
wherein the second lever (137) comprises:
a first connecting plate (137a) connected to the first lever (135), and formed to be inclined to an opposite side of the movable base (131); and
a second connecting plate (137b) integrally formed with the first connecting plate (137a) to be connected to the third lever (139), and formed to be inclined to an opposite side of the movable base (131), and
**characterized in that** a mounting groove (137a-1) is formed on a lower surface of the first connecting plate (137a) such that the other end of the third lever (139) is brought into contact with the second lever (137) and mounted thereon when in close contact with a side of the second lever (137).

2. The dual-motion type gas-insulated switchgear having multiple levers according to claim 1, wherein when the movable base (131) is located in a closed state, a connecting portion between the first lever (135) and the movable base (131) is located closer to the first movable contact (111) than one end of the second lever (137), and when the movable base (131) is moved from a closed position to an open position, the second lever (137) is configured to rotate when the first lever (135) moves along with the movable base (131).

3. The dual-motion type gas-insulated switchgear having multiple levers of claim 1, wherein the first connecting plate (137a) is formed to be longer than the second connecting plate (137b).

4. The dual-motion type gas-insulated switchgear having multiple levers of claim 1, wherein the third lever (139) is formed to be rounded toward the second lever (137).

## Patentansprüche

1. Gasisolierte Schaltanlage des Typs mit zwei Bewegungen mit mehreren Hebeln, die einen ersten beweglichen Abschnitt (110), der mit einem ersten beweglichen Kontakt (111) versehen ist, und einen zweiten beweglichen Abschnitt (130) beinhaltet, der mit einem zweiten beweglichen Kontakt (133) versehen ist, der mit dem ersten beweglichen Kontakt in Kontakt gebracht oder von diesem getrennt werden kann,
wobei der zweite bewegliche Abschnitt (130) umfasst:
eine bewegliche Basis (131), die mit einer Antriebsvorrichtung verbunden ist;
ein erster Hebel (135), dessen eines Ende mit der beweglichen Basis (131) verbunden ist, um sich in Verbindung mit der beweglichen Basis (131) zu bewegen;
ein zweiter Hebel (137), dessen eines Ende mit dem anderen Ende des ersten Hebels (135) verbunden ist, wobei der zweite Hebel (137) so konfiguriert ist, dass er sich dreht, wenn sich der erste Hebel (135) mit der beweglichen Basis (131) mitbewegt, und wobei der zweite Hebel (137) so konfiguriert ist, dass er sich durch ein stationäres Element (138) in einem an dem zweiten beweglichen Abschnitt (130) befestigten Zustand dreht, und
ein dritter Hebel (139), dessen eines Ende mit dem anderen Ende des zweiten Hebels (137) verbunden ist, und dessen anderes Ende mit dem zweiten beweglichen Kontakt (133) verbunden ist, um sich entsprechend der Drehung des zweiten Hebels (137) zu bewegen, um zu ermöglichen, dass der zweite bewegliche Kontakt (133) in Kontakt mit dem ersten beweglichen Kontakt (111) gebracht wird oder von diesem getrennt wird,
wobei, wenn die bewegliche Basis (131) in einen offenen Zustand bewegt wird, der erste Hebel (135) so konfiguriert ist, dass er sich bewegt, während er ein Ende des zweiten Hebels (137) in Richtung der beweglichen Basis (131) zieht, um den zweiten Hebel (137) in einer Richtung entgegen dem Uhrzeigersinn zu drehen, und in Verbindung damit, das andere Ende des zweiten Hebels (137) das andere Ende des dritten Hebels (139) bewegt, um in engem Kontakt mit einer Seite des zweiten Hebels (137) zu sein, während ein Ende des dritten Hebels (139) in Richtung einer gegenüberliegenden Seite der beweglichen Basis (131) gedrückt wird, um es dem zweiten beweglichen Kontakt (133) zu ermöglichen, von dem ersten beweglichen Kontakt (111) getrennt zu werden, und
wobei, wenn die bewegliche Basis (131) in einen geschlossenen Zustand bewegt wird, der erste Hebel (135) so konfiguriert ist, dass er sich bewegt, während er ein Ende des zweiten Hebels (137) auf eine gegenüberliegende Seite der beweglichen Basis (131) drückt, um den zweiten Hebel (137) im Uhrzeigersinn zu drehen, und in Verbindung damit, das andere Ende des zweiten Hebels (137) das andere Ende des dritten Hebels (139) von dem zweiten Hebel (137) wegbewegt, während ein Ende des dritten Hebels (139) in Richtung auf die bewegliche Basis (131) gedrückt wird, um es dem zweiten beweglichen Kontakt (133) zu ermöglichen, mit dem ersten beweglichen Kontakt (111) in Kontakt gebracht zu werden,
wobei der zweite Hebel (137) umfasst:
eine erste Verbindungsplatte (137a), die mit dem ersten Hebel (135) verbunden ist, und ausgebildet ist, dass sie zu einer gegenüberliegenden Seite der beweglichen Basis (131) geneigt ist; und
eine zweite Verbindungsplatte (137b), die einstückig mit der ersten Verbindungsplatte (137a) ausgebildet ist, um mit dem dritten Hebel (139) verbunden zu werden, und ausgebildet ist, dass sie zu einer gegenüberliegenden Seite der beweglichen Basis (131) geneigt ist, und
**dadurch gekennzeichnet, dass** eine Montagenut (137a-1) auf einer unteren Fläche der ersten Verbindungsplatte (137a) so konfiguriert ist, dass das andere Ende des dritten Hebels (139) mit dem zweiten Hebel (137) in Kontakt gebracht und daran montiert wird, wenn es in engem Kontakt mit einer Seite des zweiten Hebels (137) steht.

2. Gasisolierte Schaltanlage des Typs mit zwei Bewegungen, die mehrere Hebel gemäß Anspruch 1 aufweist, wobei, wenn sich die bewegliche Basis (131) in einem geschlossenen Zustand befindet, ein Verbindungsabschnitt zwischen dem ersten Hebel (135) und der beweglichen Basis (131) näher an dem ersten beweglichen Kontakt (111) angeordnet ist als ein Ende des zweiten Hebels (137), und wenn die bewegliche Basis (131) aus einer geschlossenen Position in eine offene Position bewegt wird, der zweite Hebel (137) so konfiguriert ist, dass er sich dreht, wenn sich der erste Hebel (135) zusammen mit der beweglichen Basis (131) bewegt.

3. Gasisolierte Schaltanlage des Typs mit zwei Bewegungen, die mehrere Hebel nach Anspruch 1 aufweist, wobei die erste Verbindungsplatte (137a) so ausgebildet ist, dass sie länger als die zweite Verbindungsplatte (137b) ist.

4. Gasisolierte Schaltanlage des Typs mit zwei Bewegungen, die mehrere Hebel nach Anspruch 1 aufweist, wobei der dritte Hebel (139) so ausgebildet ist, dass er zum zweiten Hebel (137) hin abgerundet ist.

## Revendications

1. Appareillage à isolation gazeuse de type à double mouvement ayant plusieurs leviers incluant une première partie mobile (110) munie d'un premier contact mobile (111) et une deuxième partie mobile (130) munie d'un deuxième contact mobile (133) devant être mis en contact avec le premier contact mobile ou séparé de celui-ci,
dans lequel la deuxième partie mobile (130) comprend :
une base mobile (131) reliée à un dispositif d'entraînement ;
un premier levier (135) dont une extrémité est reliée à la base mobile (131) pour se déplacer en liaison avec la base mobile (131) ;
un deuxième levier (137) dont une extrémité est reliée à l'autre extrémité du premier levier (135), dans lequel le deuxième levier (137) est configuré pour tourner lorsque le premier levier (135) se déplace avec la base mobile (131) et dans lequel le deuxième levier (137) est configuré pour tourner dans un état où il est fixé à la deuxième partie mobile (130) par un élément fixe (138) ; et
un troisième levier (139) dont une extrémité est reliée à l'autre extrémité du deuxième levier (137), et dont l'autre extrémité est reliée au deuxième contact mobile (133) pour se déplacer selon la rotation du deuxième levier (137) afin de permettre au deuxième contact mobile (133) d'être mis en contact avec le premier contact mobile (111) ou séparé de celui-ci,
dans lequel lorsque la base mobile (131) est déplacée vers un état ouvert, le premier levier (135) est configuré pour se déplacer tout en tirant une extrémité du deuxième levier (137) vers la base mobile (131) pour faire tourner le deuxième levier (137) dans le sens inverse des aiguilles d'une montre, et en liaison avec celui-ci, l'autre extrémité du deuxième levier (137) déplace l'autre extrémité du troisième levier (139) pour être en contact étroit avec un côté du deuxième levier (137) tout en poussant une extrémité du troisième levier (139) vers un côté opposé de la base mobile (131) pour permettre au deuxième contact mobile (133) d'être séparé du premier contact mobile (111), et
dans lequel lorsque la base mobile (131) est déplacée vers un état fermé, le premier levier (135) est configuré pour se déplacer tout en poussant une extrémité du deuxième levier (137) vers un côté opposé de la base mobile (131) pour faire tourner le deuxième levier (137) dans le sens des aiguilles d'une montre, et en liaison avec celui-ci, l'autre extrémité du deuxième levier (137) déplace l'autre extrémité du troisième levier (139) pour être éloigné du deuxième levier (137) tout en poussant une extrémité du troisième levier (139) vers la base mobile (131) pour permettre au deuxième contact mobile (133) d'être mis en contact avec le premier contact mobile (111),
dans lequel le deuxième levier (137) comprend :
une première plaque de liaison (137a) reliée au premier levier (135) et formée de manière à être inclinée vers un côté opposé de la base mobile (131) ; et
une deuxième plaque de connexion (137b) formée de manière solidaire avec la première plaque de liaison (137a) pour être reliée au troisième levier (139) et formée pour être inclinée vers un côté opposé de la base mobile (131), et
**caractérisé en ce qu'**une rainure de montage (137a-1) est formée sur une surface inférieure de la première plaque de liaison (137a) de sorte que l'autre extrémité du troisième levier (139) est mise en contact avec le deuxième levier (137) et montée sur celle-ci lorsqu'il est en contact étroit avec un côté du deuxième levier (137).

2. Appareil à isolation gazeuse de type à double mouvement ayant plusieurs leviers selon la revendication 1, dans lequel lorsque la base mobile (131) est située dans un état fermé, une partie de liaison entre le premier levier (135) et la base mobile (131) est située plus près du premier contact mobile (111) qu'une extrémité du deuxième levier (137), et lorsque la base mobile (131) est déplacée d'une position fermée à une position ouverte, le deuxième levier (137) est configuré pour tourner lorsque le premier levier (135) se déplace avec la base mobile (131) .

3. Appareillage à isolation gazeuse de type à double mouvement ayant plusieurs leviers selon la revendication 1, dans lequel la première plaque de liaison (137a) est formée pour être plus longue que la deuxième plaque de liaison (137b).

4. Appareillage à isolation gazeuse de type à double mouvement ayant plusieurs leviers selon la revendication 1, dans lequel le troisième levier (139) est formé pour être arrondi vers le deuxième levier (137).
